# EUROPÄISCHE PATENTANMELDUNG

(11) **EP 1 191 663 A2**
(43) Veröffentlichungstag der Anmeldung: **27.03.2002**
(21) Anmeldenummer: 01118480.1
(22) Anmeldetag: 01.08.2001
(51) Int. Cl.: H02K 1/06, H02K 21/12

(54) **Statorbaueinheit für eine Synchronmaschine mit transversaler Flussführung und Synchronmaschine**

(30) Priorität: 25.09.2000 DE 10047675
(71) Anmelder: Voith Turbo GmbH & Co. KG, 89522 Heidenheim (DE)
(72) Erfinder: Koll, Stefan, 89522 Heidenheim (DE); Lange, Andreas, Dr., 89551 Zang (DE); Mühlberger, Uwe, 89522 Heidenheim (DE)
(74) Vertreter: Dr. Weitzel & Partner

(57) **Zusammenfassung**

Die Erfindung betrifft eine Statorbaueinheit für eine Synchronmaschine mit transversaler Flußführung, insbesondere eine Transversalflußmaschine mit mindestens einer Phase;
- mit einer, einer Phase zugeordneten, eine Ankerwicklung tragenden Statoreinheit welche in Einbaulage einem Rotor unter Bildung eines, bezogen auf die Rotationsachse des Rotors der Synchronmaschine, in radialer Richtung angeordneten Luftspaltes zugeordnet ist;
- die Statoreinheit umfaßt zwei Reihen in Umfangsrichtung hintereinander angeordneter Zähne, wobei die in axialer Richtung nebeneinander angeordneten Zähne in Umfangsrichtung zueinander versetzt angeordnet sind;

Die Erfindung ist gekennzeichnet durch das folgende Merkmal:
- jede Statoreinheit umfaßt ein ringförmiges Jochelement aus einem metallischen Pulververbundwerkstoff und zwei mit diesem verbundene Zahnringe oder Zahnringsegmente.

## Beschreibung

Die Erfindung betrifft eine Statorbaueinheit für eine Synchronmaschine mit transversaler Flußführung, insbesondere eine Transversalflußmaschine, im einzelnen mit den Merkmalen aus dem Oberbegriff des Anspruchs 1; ferner eine Synchronmaschine mit transversaler Flußführung, insbesondere Transversalflußmaschine.

Synchronmaschinen mit transversaler Flußführung, insbesondere Transversalflußmaschinen sind in verschiedenen Ausführungen aus einer Vielzahl von Druckschriften bekannt. Diese weisen eine permanente Magneterregung im Rotor auf. Bei einer Mehrzahl der bekannten Synchronmaschinen mit transversaler Flußführung sind dabei am Rotor entlang des Umfanges Permanentmagnete in einer Anzahl entsprechend der Polzahl der Maschine angeordnet. Die Magnete sind dazu im Rotor gemäß einer Sammleranordnung in Umfangsrichtung magnetisiert, wobei zwischen den Magneten entsprechende Flußleitstücke angeordnet sind. Dem Rotor ist eine Statorbaueinheit unter Bildung eines Luftspaltes zugeordnet. Die Statorbaueinheit der Maschine umfaßt sogenannte Schnittbandkerne aus magnetisch gut leitendem Material, beispielsweise Blechpaketen aus Eisen. Über diese wird der magnetische Fluß geführt, Auf der am Luftspalt gegenüberliegenden Seite jedes Pols befindet sich ein Permanentmagnet am Rotor. Je nach Ausführungsform der Maschine werden die magnetischen Feldlinien entweder über Rückschlußringe, welche eine Reihe von Permanentmagneten magnetisch kurzschließen oder sogenannte Flußleitstücke aus magnetisch gut leitfähigem Material, welche zwischen den Permanentmagneten angeordnet sind, geführt. Bei letztgenannter Lösung werden die in Umfangsrichtung abwechselnd magnetisierten Permanentmagnete tangential durchflossen. Mit dieser Art Maschine ist es möglich, gegenüber herkömmlichen Maschinen gleichen Bauvolumens eine wesentlich höhere Drehmomentdichte aufgrund der Möglichkeit, eine Erhöhung des Drehmomentes durch Erhöhung der Polzahl zu erreichen, zu erzielen. Ein wesentlicher Nachteil der bekannten Maschinen besteht jedoch darin, daß diese aus einer Vielzahl von Einzelteilen bestehen, so daß die Gesamtmaschine durch einen hohen konstruktiven und fertigungstechnischen Aufwand charakterisiert ist.

Eine gattungsgemäße Ausführung einer Transversalflußmaschine, bei welcher der Schwerpunkt auf einer einfachen und kostengünstigen Fertigbarkeit liegt, ist aus der Druckschrift EP 1 005 136 A1 bekannt. Diese umfaßt einen Rotor und einen Stator. Im Rotor sind in Umfangsrichtung im Wechsel Permanentmagnete und Flußleitstücke montiert. Die Magnete sind in Umfangsrichtung und mit alternierender Polarität magnetisiert. Die dem Rotor zugeordnete Statorbaueinheit umfaßt eine Vielzahl einzelner weichmagnetischer Statorelemente, welche transversal zur Drehrichtung angeordnet sind. Die Statorelemente sind in Form von U-Jochen ausgeführt. Die U-Joche sind dabei gegenüber einer zur Drehachse der Maschine parallelen Richtung versetzt orientiert, so daß aufgrund der magnetischen Potentialdifferenz ein drehmomentbildender magnetischer Fluß erzeugt wird. Die Versetzung der Schenkel der U-förmigen Statorelemente gegenüber einer zur Drehachse der Maschine parallelen Richtung erfolgt um eine Polteilung. Gleiche Eigenschaften können erreicht werden, wenn anstelle der Statorelemente die Flußleitstücke schräg ausgebildet sind. Das Schließen der Magnetkreise erfolgt dann im Rotor über entsprechende Flußleitstücke, wodurch auf separate Rückschlußelemente am Stator verzichtet werden kann. Dabei werden die Flußleitstücke des Rotors in allen drei Dimensionen von magnetischem Fluß durchsetzt. Zur Vermeidung von Wirbelstromverlusten sind diese vorzugsweise aus verpreßtem weichmagnetischem Pulver mit isotropen Eigenschaften hergestellt. Für die magnetisch leitfähigen Statorelemente werden in dieser Druckschrift mehrere Bauformen vorgeschlagen.

Bezüglich der Verlustbildung durch Wirbelströme bieten Preßteile aus weichmagnetischem Pulverwerkstoff hier jedoch die besten Eigenschaften. Bei Verwendung dieses Werkstoffes können die Statorelemente sowohl verschwenkt als auch nicht verschwenkt ausgeführt werden. Nachteilig erweist sich jedoch die gegenüber ferromagnetischen Material wesentlich schlechtere magnetische Leitfähigkeit. Gerade im Zahnbereich ist jedoch die magnetische Belastung der Statorelemente sehr hoch, da dort erhöhte Ummagnetisierungsverluste zu erwarten sind. Aufgrund der sehr hohen mechanischen Belastung im Zahnbereich ist es desweiteren fraglich, ob diesen mit den pulververpreßten Zähnen über einen längeren Zeitraum Stand gehalten werden kann. Desweiteren gestaltet sich eine kraftschlüssige Verbindung der Statorelemente mit dem Gehäuse aufgrund der Ausbildung der Statorbaueinheit aus einer Vielzahl von einzelnen Statorelementen sehr aufwendig.

In einer weiteren Lösung gemäß dieser Druckschrift wird vorgeschlagen, die Statorelemente als schnittbandkernähnliche Gebilde auszuführen. Dabei wird kernorientiertes Blech verwendet, wobei die Blechung entlang dem Verlauf des magnetischen Flußes verläuft. Bezüglich der magnetischen Leitfähigkeit und der Verlustbildung weisen derartige Statorelemente zwar gute Eigenschaften auf, diese sind jedoch in der Herstellung vergleichsweise aufwendig und damit sehr kostspielig. Mit einer derartigen Ausführung ist außerdem die Herstellung von in Umfangsrichtung verschwenkten Statorelementen, insbesondere den zahnbildenden Schenkeln nicht ohne weiteres möglich.

Der dritte Lösungsansatz gemäß dem gattungsbildenden Stand der Technik besteht darin, die Statorelemente aus gestanzten Blechsegmenten zusammenzufügen. Die Blechung erfolgt dabei in Umfangsrichtung. Bei dem die Spule umschließenden Statorfluß verhindert die Blechung weitgehend die Wirbelstrombildung. Da der luftspaltnahe kraftbildende Fluß an den Polkanten jedoch senkrecht zur Blechung eintritt, ist in diesem Bereich mit nicht unerheblichen Wirbelstromverlusten zu rechnen. Auch diese Lösung gestaltet sich bezüglich der Anbindung der einzelnen Statorelemente an das Gehäuse sehr aufwendig.

Der Erfindung lag daher die Aufgabe zugrunde, einen Stator, insbesondere eine Statorbaueinheit einer Synchronmaschine der eingangs genannten Art und eine Synchronmaschine derart weiterzuentwickeln, daß insbesondere der Aufbau der Statorbaueinheit durch geringe Kosten, minimale Bauteilanzahl, einfache Montage sowie gute magnetische Leitfähigkeit und minimalen magnetischen Verlusten charakterisiert ist.

Die erfindungsgemäße Lösung ist durch die Merkmale der Ansprüche 1 und 15 charakterisiert. Vorteilhafte Ausgestaltungen sind in den Unteransprüchen beschrieben,

Die Statorbaueinheit für eine Synchronmaschine mit transversaler Flußführung, insbesondere eine Transversalflußmaschine mit mindestens einer Phase, mit einer einer Phase zugeordneten, eine Ankerwicklung tragenden Statoreinheit, welche in Einbaulage einem Rotor unter Bildung eines, bezogen auf die Rotationsachse der Synchronmaschine, in radialer Richtung angeordneten Luftspaltes zugeordnet ist, umfaßt zwei Reihen von in Umfangsrichtung hintereinander angeordneten Zähnen bzw. Zahnelementen, wobei die in axialer Richtung nebeneinander angeordneten Zahnelemente in Umfangsrichtung zueinander versetzt angeordnet sind. Erfindungsgemäß wird die einer Phase zuordenbare Statoreinheit aus einem ringförmigen pulvermetallurgisch hergestellten Jochelement, welches aus einem weichmagnetischen Pulververbundwerkstoff besteht, und zwei mit diesem verbundenen offenen oder geschlosenen Zahnringen gebildet. Anstelle der in der Ausführung gemäß dem Stand der Technik verwendeten einzelnen Statorelemente tritt nunmehr eine Kombination aus Zahnringen und einer inneren Jochstruktur. Die Zahnringe werden aus ferromagnetischen Werkstoffen gefertigt und können daher auch als Weicheiseneinheiten bezeichnet werden. Die Zahnringe sind bezüglich der Anzahl ihrer einzelnen Zähne bzw. Zahnelemente und der äußeren Abmessungen identisch ausgeführt und in Umfangsrichtung um eine Polteilung zueinander versetzt am ringförmigen Jochelement angeordnet.

Eine Vielzahl von Zahnelementen, welche im Axialschnitt betrachtet in axialer Richtung auf einem gemeinsamen Durchmesser, bezogen auf die Symmetrieachse der elektrischen Maschine liegen, beziehungsweise welche sich bei der Projizierung auf die Symmetrieachse durch einen gemeinsamen Punkt auf dieser beschreiben lassen, bilden dabei eine sogenannnte Weicheiseneinheit. Zur Realisierung eines U-förmigen Querschnittes mit zueinander versetzten Schenkeln erfolgt die Kopplung der als Zahnringe ausgeführten Weicheiseneinheiten über das ringförmige Jochelement.

Die erfindungsgemäße Lösung bietet den Vorteil, daß aufgrund der in Umfangsrichtung einteilig ausgeführten Elemente der Montageaufwand für eine einzelne Statoreinheit erheblich minimiert wird, da lediglich eine Befestigung beziehungsweise Fixierung der einzelnen Elemente in Umfangsrichtung erforderlich ist, wobei über diese Befestigung die Fixierung in axialer Richtung vorzugsweise mit vorgenommen wird.

Vorzugsweise sind die Weicheiseneinheiten in Umfangsrichtung sternförmig ausgeführt, so daß diese eine Vielzahl von einzelnen, sich in Richtung des Rotors vom ringförmigen Jochelement wegerstreckenden und Zahnelemente beschreibende Vorsprünge aufweisen. Die Anordnung der die Zahnelemente beschreibenden Vorsprünge der Weicheiseneinheiten in Umfangsrichtung erfolgt entsprechend der Konfiguration des Rotors mit einem bestimmten Abstand zueinander. Vorzugsweise sind die die Zahnelemente bildenden Vorsprünge einer Weicheiseneinheit, das heißt eines Zahnringes über einen gemeinsamen, sich in Umfangsrichtung erstreckenden Grundkörper, mit welchem diese vorzugsweise eine bauliche Einheit bilden oder einteilig aus diesem gefertigt sind, mit dem ringförmigen Rückschlußelement gekoppelt.

In einer besonders bevorzugten Ausführung wird der einzelne Zahnring, inbesondere die einzelne Weicheiseneinheit von einem in axialer Richtung beschichteten Blechpaket gebildet, welche in axialer Richtung hintereinander aufgeschichtete ringförmige Elemente aus entsprechend gestanztem Blech umfassen. In Umfangsrichtung betrachtet weist dabei jedes einzelne ringförmige Blechelement und damit jedes Blechpaket im Bereich der zum Rotor hin ausgerichteten Umfangsfläche randoffene Aussparungen zur Bildung der die Zahnelemente beschreibenden Vorsprünge auf. Diese randoffenen Aussparungen sind über den Umfang jedes einzelnen, ringförmig ausgestalteten Blechelementes und damit auch des gesamten Blechpaketes in gleichmäßigen Abständen verteilt angeordnet. In Umfangsrichtung weist jedes einzelne ringförmig gestaltete Blechelement und in der Gesamtheit der in axialer Richtung aufgeschichteten Blechelemente jedes Blechpaket eine im wesentlichen sternförmige Kontur auf. Die Anzahl der in Einbaulage in axialer Richtung hintereinander angeordneten beziehungsweise aufgeschichteten ringförmigen Einzelblechelemente hängt dabei von der Auslegung der gesamten elektrischen Maschine ab. Die Ausbildung der als Weicheiseneinheiten fungierenden Zahnringe aus Blechpaketen gewährleistet eine gute Permeabilität im Zahnbereich und minimiert die auftretenden Wirbelstromverluste. Die gute Permeabilität des Blechs beziehungsweise der einzelnen Blechelemente trägt der magnetischen Belastung im luftspaltnahen Zahnbereich Rechnung. Die Blechung in axialer Richtung verhindert, daß sich durch den an den Polkanten angreifenden kraftbildenden Fluß Wirbelströme ausbilden. Desweiteren weisen die Blechzähne eine ausreichende mechanische Festigkeit auf. Damit sich über den Maschinenumfang keine zusätzlichen Kreisströme bilden, sind die Blechringe vorzugsweise an mindestens einer Stelle des Umfanges unterbrochen, das heißt aufgetrennt ausgeführt, was der offenen Ausführung der Zahnringe entspricht. Die Unterbrechung erfolgt dabei im Bereich zweier einander in Umfangsrichtung benachbart angeordneter Zahnelemente und erstreckt sich vorzugsweise auch nicht über eine Zahnlücke hinweg. Durch mehrmalige Unterbrechung entstehn Zahnringsegmente. Diese sollten jedoch, um den Vorteil der einfachen Montage zusammenhängender Strukturen nicht zu riskieren eine Mindestanzahl von Zahnelementen umfassen.

Die erfindungsgemäße Lösung bietet aufgrund der im wesentlichen ringförmigen Struktur der einzelnen Elemente die Möglichkeit einer einfachen Zuordnung der einzelnen Elemente zueinander in Umfangsrichtung - beispielsweise wie erfindungsgemäß vorgesehen mit Versatz um eine Polteilung.

Die Kopplung der Zahnringe beziehungsweise Weicheiseneinheiten mit dem ringförmigen Jochelement kann dabei jeweils einzeln oder über ein gemeinsames Befestigungselement kraft- und/oder formschlüssig mit dem ringförmigen Jochelement erfolgen. Bei Ausführungen mit Kraftschluß werden vorzugsweise die Zahnringe mit ringförmigem Jochelement mittels einer Preßverbindung zusammengefügt. Dies bietet den Vorteil, daß aufgrund des Fehlens des reinen Stoffschlußes keine Abhängigkeit der Betriebsdauer von den verwendeten Verbundwerkstoffen vorliegt. Die konkrete Ausgestaltung der Preßverbindung kann dabei unterschiedlich erfolgen. Die Auswahl des Verfahrens liegt dabei im Ermessen des zuständigen Fachmannes.

Das sich ringförmig in Umfangsrichtung erstreckende Jochelement kann in Umfangsrichtung betrachtet
a) einteilig, oder
b) mehrteilig
ausgeführt sein. Bei Ausführung entsprechend der Variante b) wird die ringförmige Kontur durch Befestigung der Teilelemente des Jochelementes am Gehäuse der Synchronmaschine ode reinem mit diesem verbundenen Gehäuseteil in Umfangsrichtung fixiert.

Die die Wicklung tragende Statoreinheit aus ringförmigem Jochelement und Zahnringen beziehungsweise Weicheiseneinheit kann als kompakte und bereits vormontierte Grundbaueinheit angeboten werden und in eine Statorbaueinheit einer Synchronmaschine mit transversaler Flußführung, insbesondere das Statorgehäuse auf einfache Art und Weise integriert werden. Die Anzahl der gegeneinander in axialer und radialer Richtung zu fixierenden Bauelemente ist gering und die Fixierung erfolgt bereits auf Grundlage der Ausführung der Statorbaueinheit. Zwischen den beiden Zahnringen wird die Ankerwicklung angeordnet. Die gesamte Einheit inclusive der Ankerwicklung kann mit einem Isoliermittel, beispielsweise einem Isolierharz getränkt werden. Der Teilbereich der Statoreinheit in Form des ringförmigen Jochelementes aus pulvermetallurgisch hergestelltem Material bietet den Vorteil isotroper, magnetischer und elektrischer Eigenschaften. Entsprechend der Statorkonstruktion ist dieser Bereich lediglich als Rückschlußbereich für den magnetischen Fluß zwischen den Zahnringen erforderlich. Die aufgrund der Werkstoffeigenschaften an Pulververbundwerkstoffen bedingte schlechtere Permeabilität in diesem Bereich kann wegen des gegenüber den Zahnringen vergrößerten Flußquerschnittes in Kauf genommen werden.

Desweiteren bietet die Verwendung ringförmiger Strukturen - eines ringförmigen Jochelementes sowie der Zahnringe - den Vorteil einer erhöhten Festigkeit.

Das ringförmige Jochelement umfaßt im Querschnitt betrachtet wenigstens drei Teilabschnitte - einen ersten Teilabschnitt, einen zweiten Teilabschnitt und einen dritten Teilabschnitt. Die beiden Zahnringe sind jeweils dem ersten und dem dritten Teilabschnitt zugeordnet. Die Anordnung der Ankerwicklung erfolgt zwischen den beiden Zahnringen im zweiten Teilabschnitt. Die einzelnen Abschnitte sind bezüglich ihrer Abmessungen derart ausgeführt, daß der zweite Teilabschnitt jeweils eine Anschlagfläche in axialer Richtung für einen Zahnring bildet.

Unter einem weiteren Aspekt der Erfindung ist jedem Zahnring desweiteren eine Endscheibe zur Begrenzung der Bewegbarkeit in axialer Richtung zugeordnet. Zusätzlich sind Mittel zur Verspannung der Elemente Zahnring, Jochelement und Endscheibe in axialer Richtung vorgesehen. Diese Mittel werden vorzugsweise von den Befestigungselementen zur Lagefixierung in axialer Richtung und in Umfangsrichtung der Zahnringe gegenüber dem Jochelement gebildet.

Bei Statorbaueinheiten mehrphasiger Maschinen mit einer bestimmten Anzahl an Phasen ist eine entsprechende Nebeneinanderschaltung einzelner Statoreinheiten entsprechend der Anzahl der Phasen erforderlich. Dabei besteht die Möglichkeit der Fixierung der einzelnen Statoreinheiten hinsichtlich ihrer Lage in axialer Richtung und in radialer Richtung durch Befestigung an einem Gehäuse und/oder zusätzliche Befestigung untereinander, beispielsweise mittels entsprechender formschlüssiger Elemente, wobei die einzelnen Statoreinheiten mit entsprechenden zueinander komplementären Ausnehmungen und Vorsprüngen versehen werden müßten.

Unter einem weiteren Aspekt der Erfindung kann der Zahnring in Umfangsrichtung auch unterteilt ausgeführt sein. In diesem Fall erfolgt die Unterteilung jedoch derart, daß das einzelne Zahnringsegment eine Mehrzahl von Zahnelementen trägt. Auch diese Lösung bietet die gleichen Vorteile, wie bereits genannt. Lediglich die Anzahl der zur Lagefixierung erforderlichen Befestigungselemente erhöht sich, weshalb Unterteilungen in Segmente nur mit minimaler Anzahl vorzusehen sind. Bei dieser Ausführung treten aufgrund der durch die Segmente bedingten Unterbrechungen keine Kreisströme in in den Zahnringen auf.

Die erfindungsgemäße Lösung für die Ausgestaltung von Statorbaueinheiten ist unabhängig von der Art der Synchronmaschinen mit transversaler Flußführung - Außenläufer oder Innenläufer - geeignet. Vorzugsweise findet die erfindungsgemäße Lösung jedoch für Transversalflußmaschinen mit Außenläufer Anwendung, da bei Ausbildung der Statorbaueinheit als Innenstator die Länge der Ankerwicklung gegenüber einer Ausführung als Außenstator reduziert wird.

Die erfindungsgemäße Lösung ist dabei für Synchronmaschinen mit transversaler Flußführung unabhängig von deren Betriebsweise als Motor oder Generator geeignet. Die Anwendung kann sowohl in stationären als auch mobilen Anlagen erfolgen.

Die erfindungsgemäße Lösung wird nachfolgend anhand von Figuren erläutert. Darin ist im einzelnen folgendes dargestellt:
- Figur 1a und 1b: verdeutlichen in schematisch vereinfachter Darstellung in zwei Ansichten den Grundaufbau einer erfindungsgemäß gestalteten Statoreinheit;
- Figur 2: verdeutlicht anhand einer dreihphasigen Synchronmaschine mit transversaler Flußführung den Grundaufbau einer erfindungsgemäß gestalteten Statorbaueinheit.

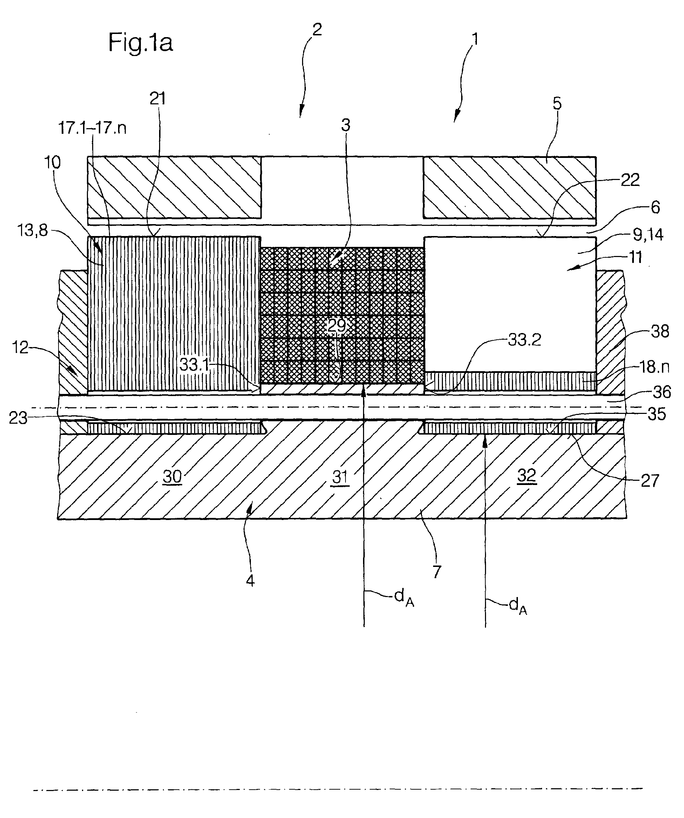

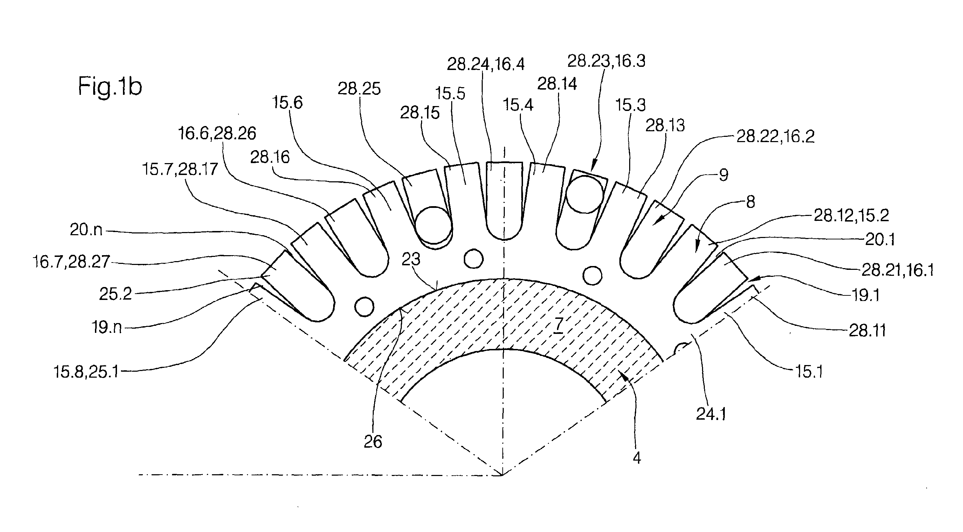

Die Figur 1 verdeutlicht anhand eines Ausschnittes aus einem Axialschnitt einer Statorbaueinheit 1 eine Synchronmaschine 2 mit transversaler Flußführung, insbesondere Transversalflußmaschine, den Grundaufbau einer einer Phase zugeordneten und einer Ankerwicklung 3 tragenden Statoreinheit 4. Die Statoreinheit 4 stellt dabei ein Element der Statorbaueinheit 1 dar. Die Statoreinheit 4 ist in einem, hier im einzelnen nicht dargestellten Statorgehäuse angeordnet. In diesem Gehäuse ist ein Rotor 5 der Synchronmaschine 2 mit transversaler Flußführung gelagert. Die Statoreinheit 4 ist dem Rotor 5, insbesondere einer Phase unter Bildung eines Luftspaltes 6 zugeordnet. Im dargestellten Fall ist der Rotor 5 als Außenläufer ausgeführt, das heißt die Statorbaueinheit 1 bildet einen Innenstator und die Statoreinheit 4 ist Bestandteil des Innenstators. Die Statoreinheit 4 beschreibt in einer Ansicht im Axialschnitt der elektrischen Maschine gemäß Figur 1 bei Projizierung in eine durch die Rotationsachse R des Rotors und einer Senkrechte zu dieser S beschreibbaren Ebene E im wesentlichen U-förmig ausgebildete Querschnittsfläche. Die Statoreinheit 4 umfaßt zu diesem Zweck ein ringförmig gestaltetes Jochelement 7, welches die Funktion eines Rückschlußelementes ausübt und das mit zwei als Zahnringe 8 und 9 ausgeführten Weicheiseneinheiten 10 beziehungsweise 11 eine bauliche Einheit 12 bildet. Der Begriff Weicheisenheiten steht dabei für Elemente aus weichmagnetischen Werkstoffen. Die Zahnringe 8 und 9 sind derart aufgebaut, daß diese im Querschnitt betrachtet zwei Schenkel 13 und 14 der Statoreinheit 4 bilden. In Funktionslage stehen die Schenkel 13 und 14 den Permanentmagneten des Rotors 5 gegenüber. Die Schenkel 13 und 14 sind in Umfangsrichtung gegeneinander versetzt um eine Polteilung. Diese werden von den Zähnen 15.1 bis 15.n beziehungsweise 16.1 bis 16.n der Zahnringe 8 und 9 gebildet. Innerhalb der Schenkel 13 und 14, das heißt zwischen den Zahnringen 8 und 9 befindet sich von drei Seiten umschlossen die in Umfangsrichtung verlaufende Ankerwicklung 3. Die Zähne 15.1 bis 15.n beziehungsweise 16.1 bis 16.n gemäß Figur 1b der Zahnringe 8 und 9 sind in Umfangsrichtung mit einer Teilung im bestimmten Verhältnis zur Polteilung T am Rotor 5 voneinander beabstandet angeordnet. Zur Realisierung einer einfachen Montage sind die Weicheiseneinheiten 10 und 11 in Form von Zahnringen 8 und 9 ausgeführt. Vorzugsweise werden die Zahnringe 8 und 9 als axial geschichtete Blechpakete ausgeführt. Jeder Zahnring 8 beziehungsweise 9 der Statoreinheit 4 umfaßt dazu eine Mehrzahl von in axialer Richtung hintereinander angeordneten ringförmigen Elementen in Form von Blechplatten 17.1 bis 17.n beziehungsweise 18.1 bis 18.n. Die Beabstandung der Zähne 15.1 bis 15.n beziehungsweise 16.1 bis 16.n mit einer bestimmten Teilung T zueinander wird durch Ausführung beziehungsweise Ausbildung randoffener Schlitze 19.1 bis 19.n für die Zähne 15.1 bis 15.n und 20.1 bis 20.n für die Zähne 16.1 bis 16.n des Zahnringes 9 realisiert. Die randoffenen Schlitze erstrecken sich dabei bei Ausbildung der Statoreinheit 4 als ein Element der Statorbaueinheit 1 in Form des Innenstators vom Bereich des Außenumfanges 21 beziehungsweise 22 der Blechplatten 17.1 bis 17.n beziehungsweise 18.1 bis 18.n in radialer Richtung zur zum Rotor 5 hinweisenden Fläche 23 des Jochelementes. Die randoffenen Schlitze sind desweiteren in axialer Richtung koaxial zur Rotationsachse R des Rotors 5 ausgeführt. Die durch die randoffenen Schlitze 19.1 bis 19.n beziehungsweise 20.1 bis 20.n gebildeten Öffnungen weisen immer zum Luftspalt beziehungsweise Rotor 5 hin. Das Jochelement 7 ist aus einem verpreßten Pulververbundwerkstoff hergestellt. Als Grundmaterial wird dabei Metallpulver verwendet. Die Pulver werden dann verpreßt zu sogenannten Grünlingen. Diese werden entweder kalt oder unter erhöhter Temperatureinwirkung zur Erzielung bestimmter Eigenschaften verpreßt. Unter Umständen kann eine Nachbehandlung vorgesehen werden.

In Umfangsrichtung betrachtet gemäß Figur 1b weisen die Zahnringe 8 und 9 in radialer Richtung wenigstens zwei Teilbereiche auf, einen ersten Teilbereich 24.1 und einen zweiten Teilbereich 25.1 beziehungsweise für den Zahnring 9 einen ersten Teilbereich 24.2 beziehungsweise einen zweiten Teilbereich 25.2. Der erste Teilbereich 24.1 beziehungsweise 24.2 ist zur Kopplung mit dem ringförmigen Jochelement 7 vorgesehen und ebenfalls ringförmig ausgeführt. Die Kopplung mit dem Jochelement 7 erfolgt dabei im Bereich der vom Rotor 5 in Einbaulage abgewandten Stirnseite 26 des Zahnringes 8 beziehungsweise 27 des Zahnringes 9. Der zweite Teilbereich 25.1 des Zahnringes 8 beziehungsweise 25.2 des Zahnringes 9 wird dabei aus einer Vielzahl von Einzelzahnelementen beschreibenden Vorsprüngen gebildet, welche mit 28.11 bis 28.1n für den Zahnring 8 und 28.21 bis 28.2n bezeichnet sind und die in Umfangsrichtung betrachtet vorzugsweise mit einer bestimmten Polteilung bezogen auf die Anordnung der Permanentmagneten am Rotor beabstandet sind. Die Einzelzahnelemente 28.11 bis 28.1n sind bei Ausführung der Zahnringe aus gestanzten Blechplatten 17.1 bis 17.n beziehungsweise 18.1 bis 18.n als bauliche Einheit mit dem ersten Teilbereich 24.1 beziehungsweise 24.2 ausgeführt. Die Einzelzahnelemente 28.1.1 bis 28.1.n sind dann als Vorsprünge ausgebildet. Erkennbar ist ferner in der Seitenansicht der Versatz zwischen den Zahnelementen der einzelnen Zahnringe 8 und 9 zueinander in Umfangsrichtung um eine Polteilung.

Für die Kopplung zwischen den Zahnringen 8 und 9 und dem Jochelement 7, welches im Funktionszustand als sogenannter Rückschlußring fungiert und mechanisch die Funktion eines Tragelementes ausführt, bestehen eine Vielzahl von Möglichkeiten. Vorzugsweise wird bei Ausführung der Zahnringe aus Weicheisenblechpaketen in geschlüpfter Ausführung eine kraftschlüssige Kopplung zwischen dem Jochelement 7 und den einzelnen Blechplatten 17.1 bis 17.n beziehungsweise 18.1 bis 18.n gebildeten Zahnringes 8 beziehungsweise 9 vorgenommen. Dies kann im einfachsten Fall durch eine Preßverbindung erfolgen. In diesem Fall sind die einzelnen Elemente der Statoreinheit 4, ringförmiges Jochelement und die Zahnringe 8 beziehungsweise 9 derart hinsichtlich ihrer Abmessungen auszulegen, daß diese eine bestimmte Passung miteinander einnehmen. Im einzelnen betrifft das wenigstens die miteinander in Wirkverbindung tretenden Flächenbereiche, welche an der zum Rotor 6 ausgerichteten Stirnseite 23 des ringförmigen Jochelementes 7 ausgebildet sind und die mit diesen in Wirkverbindung tretenden Flächenbereiche an der zum Jochelement 7 hingerichteten Stirnseite 26 beziehungsweise 27 der Zahnringe 8 und 9.

Andere Möglichkeiten der Kopplung zwischen den Zahnringen 8 und 9 und dem ringförmigen Jochelement in radialer und axialer Richtung bestehen in formschlüssigen Verbindungen beziehungsweise in form- und kraftschlüssigen Verbindungen. Dazu ist es beispielsweise denkbar, die Zahnringe 8 und 9 mit entsprechenden Vorsprüngen zu versehen, welche in dazu komplementär ausgeführte Vorsprünge am Jochefement 7 eingeführt werden können und mit diesem beispielsweise mittels einer Schnappverbindung formschlüssig verbunden werden können. Im einzelnen sind eine Vielzahl von Ausführungsmöglichkeiten denkbar, auf welche jedoch hier im Einzelfall nicht eingegangen werden soll, da die Möglichkeit bei Kenntnis des erfindungsgemäßen Grundgedankens im Tätigkeitsbereich des zuständigen Fachmannes liegt.

Die Ankerwicklung 3, welche zwischen den beiden von den Zahnringen 8 und 9 gebildeten Schenkeln 13 und 14 angeordnet ist, wird direkt auf den von den Teilflächen der Stirnseiten 26 und 27 freien Bereich der zum Rotor hingerichteten Fläche 23 des Jochelementes 7 aufgewickelt. Durch die in Umfangsrichtung als Baueinheit ausgeführte Ausführung der Zahnringe 8 und 9 wird die Ankerwicklung 3 in axialer Richtung fixiert. Die Fixierung in radialer Richtung ergibt sich bei Ausführung der Statorbaueinheit 1 als Innenstator als wicklungstragende Statoreinheit 4 durch die beim Wickeln erzeugte Straffheit. Die Ankerwicklung 3 liegt dabei direkt auf einer Teilfläche 29 der zum Rotor 5 hin ausgerichteten Fläche 23 des Jochelementes 7 auf. Zur genauen Fixierung der Lage der Zahnringe 8 und 9 in axialer Richtung beim Einbau ist das ringförmige Jochelement 7 vorzugsweise in drei Teilabschnitte untergliedert, einen ersten Teilabschnitt 30, einen zweiten Teilabschnitt 31 und einen dritten Teilabschnitt 32. Der Teilabschnitt 31 bildet dabei jeweils mit den Teilabschnitten 30 und 32 in axialer Richtung einen Anschlag 33.1 beziehungsweise 33.2 für die Zahnringe 8 und 9. Die einzelnen Teilabschnitte 30, 31 und 32 bilden dabei die zum Rotor hingerichtete Fläche 23 des Jochelementes. Im einfachsten Fall werden die einzelnen Teilflächen 29 sowie die zu den Stirnseiten 26 und 27 der Zahnringe 8 und 9 hin ausgerichteten Teilflächen 34 und 35 durch Ausbildung des ringförmigen Jochelementes 7 mit unterschiedlichem Außendurchmesser d_{A} in axialer Richtung gebildet.

Die Statoreinheit 4, welche aus dem ringförmigen Jochelement 7 sowie den Zahnringen 8 und 9 und der Ankerwicklung 3 besteht, kann als komplett vormontierte Baueinheit bereitgestellt werden. Vorzugsweise sind zusätzliche Verbindungselemente zum Verspannen der Statoreinheit 4 in axialer Richtung vorgesehen. In diesem Fall ist stellvertretend ein Verbindungselement vorgesehen. Vorzugsweise sind zur Realisierung der Verspannung in axialer Richtung der Statoreinheit Endringe 37 und 38 zugeordnet, welche einen Anschlag für die Zahnringe 8 und 9 in axialer Richtung bilden. Das Verbindungselement verspannt dabei beide Endringe 37 und 38 gegeneinander. Das Verbindungselement 36 erstreckt sicht dabei durch die Zahnringe 8 und 9 sowie einen Teil des ringförmigen Jochelementes 7, insbesondere im Bereich des zweiten Teilabschnittes 31. Die axiale Verspannung erfolgt mit der dem Moment am Innenstator beziehungsweise der Statoreinheit 4 erforderlichen Vorspannung.

Desweiteren ist aus der Figur 1 b ersichtlich, daß die Zahnringe 8 und 9 in Umfangsrichtung zur Vermeidung von Ringströmen unterbrochen ausgeführt sind. Denkbar wäre dabei auch theoretisch eine Unterteilung der Zahnringe in mehrere Einzelsegmente, was jedoch aus Einfachkeitsgründen der Montage nicht ausgeführt wird.

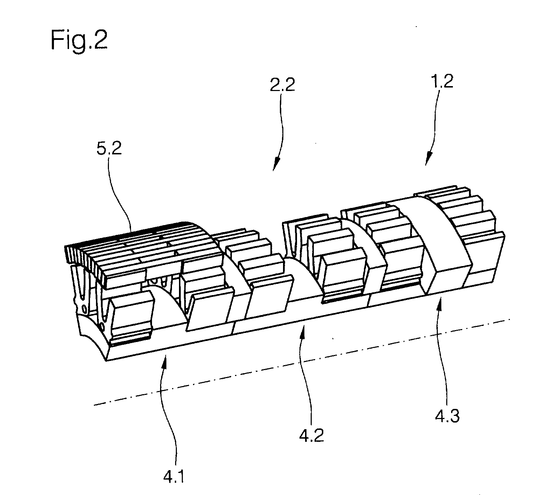

Die Figur 2 verdeutlicht anhand eines Ausschnittes aus einer dreihphasigen Synchronmaschine mit transversaler Flußführung 2.2 den Aufbau einer Statorbaueinheit 1.2, umfassend eine, jeder Phase zugeordnete Statoreinheit 4. Die Statoreinheiten sind dazu mit 4.1, 4.2 und 4.3 bezeichnet. Jede ist identisch aufgebaut. Bezüglich des Aufbaus einer einzelnen Statoreinheit 4.1 bis 4.3 wird auf die Ausführungen in Figur 1 verwiesen. Die einzelnen Statoreinheiten 4.1 bis 4.3 können dabei hinsichtlich ihrer Lage zueinander in axialer und radialer Richtung fixiert sein, beispielsweise mittels im einzelnen nicht dargestellter formschlüssiger Elemente. Zusätzlich besteht natürlich auch die Möglichkeit, daß die einzelnen Statoreinheiten in einem, hier nicht dargestellten Gehäuse einer Synchronmaschine 2.2 mit transvesaler Flußführung angeordnet sind. Erkennbar ist ferner der Rotor 5.2, welcher als Außenläufer ausgeführt ist.

Die erfindungsgemäße Lösung ist nicht auf die Ausführungen gemäß der Figuren 1 und 2 beschränkt. Denkbar ist die Anwendung der Ausführung der Statoreinheit 4 in Synchronmaschinen mit transversaler Flußführung mit unterschiedlicher Anzahl von Phasen. Bezüglich der konkreten Ausgestaltung des Einzelelementes, insbesondere Jochelement oder Zahnring sind Modifikationen von den in den Figuren 1 und 2 beschriebenen Ausführungen möglich. Die Erfindung schließt Ausführungen von Statoreinheiten ein, bei welchen die Einzelelemente ringförmig ausgestaltet sind.

### Bezugszeichenliste

- 1, 1.2: Statorbaueinheit
- 2, 2.2: Synchronmaschine
- 3: Ankerwicklung
- 4, 4.1, 4.2, 4.3: Statoreinheit
- 5, 5.2: Rotor
- 6, 6.2: Luftspalt
- 7: Jochelement
- 8: Zahnring
- 9: Zahnring
- 10: Weicheiseneinheit
- 11: Weicheiseneinheit
- 12: bauliche Einheit
- 13: Schenkel
- 14: Schenkel
- 15.1 - 15.n: Zähne
- 16.1 - 16.n: Zähne
- 17.1 - 17.n: Blechplatte
- 18.1 - 18.n: Blechplatte
- 19.1 - 19.n: randoffene Schlitze
- 20.1 - 20.n: randoffene Schlitze
- 21: Außenumfang
- 22: Außenumfang
- 23: zum Rotor weisende Fläche des Jochelementes
- 24.1, 24.2: erster Teilbereich
- 25.1, 25.2: zweiter Teilbereich
- 26: Stirnseite
- 27: Stirnseite
- 28.1 - 28.n: Vorsprünge
- 29: Teilfläche
- 30: erster Teilabschnitt
- 31: zweiter Teilabschnitt
- 32: dritter Teilabschnitt
- 33.1: Anschlag
- 33.2: Anschlag
- 34: Teilfläche
- 35: Teilfläche
- 36: Verbindungselement
- 37: Zwischen- bzw. Endring
- 38: Zwischen- bzw. Endring

## Patentansprüche

1. Statorbaueinheit (1; 1.2) für eine Synchronmaschine (2; 2.2) mit transversaler Flußführung, insbesondere eine Transversalflußmaschine mit mindestens einer Phase;
1.1 mit einer, einer Phase zugeordneten, eine Ankerwicklung (3) tragenden Statoreinheit (4; 4.1, 4.2, 4.3), welche in Einbaulage einem Rotor (5; 5.2) unter Bildung eines, bezogen auf die Rotationsachse des Rotors (5; 5.2) der Synchronmaschine (1; 1.2), in radialer Richtung angeordneten Luftspaltes (6) zugeordnet ist;
1.2 die Statoreinheit umfaßt zwei Reihen in Umfangsrichtung hintereinander angeordneter Zähne (15.1 - 15.n, 16.1 - 16.n), wobei die in axialer Richtung nebeneinander angeordneten Zähne (15.1 - 15.n, 16.1 - 16.n) in Umfangsrichtung zueinander versetzt angeordnet sind;
**gekennzeichnet durch** das folgende Merkmal:
jede Statoreinheit (4; 4.1, 4.2, 4.3) umfaßt ein ringförmiges Jochelement (7) aus einem metallischen Pulververbundwerkstoff und zwei mit diesem verbundene mindestens einmal unterbrochene Zahnringe (8, 9).

2. Statorbaueinheit (1; 1.2) für eine Synchronmaschine (2; 2.2) mit transversaler Flußführung nach Anspruch 1, **dadurch gekennzeichnet, daß** die Zahnringe (8, 9) hinsichtlich ihrer äußeren Abmessungen in Anzahl der Zähne (15.1 - 15.n, 16.1 - 16.n) identisch aufgebaut sind und in Umfangsrichtung gegeneinander um eine Polteilung T versetzt angeordnet sind.

3. Statorbaueinheit (1; 1.2) für eine Synchronmaschine (2; 2.2) mit transversaler Flußführung nach einem der Ansprüche 1 oder 2, **dadurch gekennzeichnet, daß** jeder Zahnring (8, 9) oder Zahnringsegement aus einem ringförmigen Element mit in Umfangsrichtung in bestimmten vordefinierten Abständen randoffenen Aussparungen (19.1 - 19.n, 20.1 - 20.n) an den vom ringförmigen Umfang des Jochelementes (7) wegerstreckenden Flächen unter Bildung der Zähne (15.1 - 15.n, 16.1 - 16.n) besteht.

4. Statorbaueinheit (1; 1.2) für eine Synchronmaschine mit transversaler Flußführung (2; 2.2) nach einem der Ansprüche 1 oder 2, **dadurch gekennzeichnet, daß** jeder Zahnring (8, 9) oder jedes Zahnringsegment von einem Blechpaket aus einer Mehrzahl von einzelnen in axialer Richtung hintereinander angeordneten Blechelementen (17.1 - 17.n, 18.1 - 18.n) gebildet wird.

5. Statorbaueinheit (1; 1.2) für eine Synchronmaschine (2; 2.2) mit transversaler Flußführung nach Anspruch 3, **gekennzeichnet durch** die folgenden Merkmale
5.1 jedes Blechpaket ist ringförmig ausgebildet;
5.2 jedes Blechpaket weist einen in Umfangsrichtung verlaufenden Grundkörper mit **durch** randoffene Aussparungen (19.1 - 19.n, 20.1 - 20.n) im Bereich der in Einbaulage zum Rotor (5; 5.2) hinweisenden Umfangsfläche (21, 22) ausgebildeten Vorsprüngen (28.1 - 28.n) auf;
5.3 die randoffenen Aussparungen (19.1 - 19.n, 20.1 - 20.n) sind in Umfangsrichtung betrachtet in bestimmten gleichmäßigen Abständen zueinander angeordnet.

6. Statorbaueinheit (1; 1.2) für eine Synchronmaschine (2; 2.2) mit transversaler Flußführung nach Anspruch 5, **dadurch gekennzeichnet, daß** die ringförmige Ausführung der Blechpakete in Umfangsrichtung eine Unterbrechung enthält.

7. Statorbaueinheit (1; 1.2) für eine Synchronmaschine (2; 2.2) mit transversaler Flußführung nach einem der Ansprüche 1 bis 6, **dadurch gekennzeichnet, daß** das Jochelement (7) und die Zahnringe (8, 9) formschlüssig miteinander gekoppelt sind.

8. Statorbaueinheit (1; 1.2) für eine Synchronmaschine (2; 2.2) mit transversaler Flußführung nach einem der Ansprüche 1 bis 5, **dadurch gekennzeichnet, daß** das Jochelement (7) und die Zahnringe (8, 9) kraftschlüssig miteinander gekoppelt sind.

9. Statorbaueinheit (1; 1.2) für eine Synchronmaschine (2; 2.2) mit transversaler Flußführung nach Anspruch 8, **dadurch gekennzeichnet, daß** die kraftschlüssige Kopplung über eine Preßverbindung realisiert wird.

10. Statorbaueinheit (1; 1.2) für eine Synchronmaschine (2; 2.2) mit transversaler Flußführung nach einem der Ansprüche 1 bis 9, **gekennzeichnet durch** die folgenden Merkmale:
10.1 das Jochelement (7) umfaßt wenigstens drei Teilabschnitte (30, 31, 32) - einen ersten Teilabschnitt (30), einen zweiten Teilabschnitt (31) und einen dritten Teilabschnitt (32);
10.2 die beiden Zahnringe (8, 9) sind jeweils dem ersten und dem dritten Teilabschnitt (30, 32) und die Ankerwicklung (3) dem zweiten Teilabschnitt (31) zugeordnet;
10.3 der zweite Abschnitt (31) bildet jeweils eine Anschlagfläche (33.1, 33.2) in axialer Richtung für die Zahnringe (8, 9).

11. Statorbaueinheit (1; 1.2) für eine Synchronmaschine (2; 2.2) mit transversaler Flußführung nach Anspruch 10, **gekennzeichnet durch** die folgenden Merkmale:
11.1 jedem Zahnring (8, 9) ist desweiteren eine Endscheibe (37, 38) zur Begrenzung der Bewegbarkeit in axialer Richtung zugeordnet;
11.2 mit Mitteln zur Erzeugung einer Verspannung der Elemente Zahnring (8, 9), Jochelement (7) und Endscheibe (37, 38) in axialer Richtung.

12. Statorbaueinheit (1; 1.2) für eine Synchronmaschine (2; 2.2) mit transversaler Flußführung nach einem der Ansprüche 10 oder 11, **dadurch gekennzeichnet, daß** das Jochelement (7) in Umfangsrichtung mehrteilig ausgeführt ist.

13. Statorbaueinheit (1; 1.2) für eine Synchronmaschine mit transversaler Flußführung (2; 2.2) nach einem der Ansprüche 1 bis 12, **dadurch gekennzeichnet, daß** diese einen Innenstator der Synchronmaschine (2, 2.2) bildet.

14. Statorbaueinheit (1; 1.2) für eine Synchronmaschine (2; 2.2) mit transversaler Flußführung nach einem der Ansprüche 1 bis 13, **dadurch gekennzeichnet, daß** diese eine Mehrzahl von Statoreinheiten (4; 4.1, 4.2, 4.3) entsprechend der Anzahl der Phasen der Synchronmaschine (2; 2.2) umfaßt.

15. Synchronmaschine (2; 2.2) mit transversaler Flußführung, insbesondere Transversalflußmaschine;
15.1 mit mindestens einer Phase;
15.2 mit einem Rotor (5; 5.2);
15.3 mit einer Statorbaueinheit (1; 1.2) gemäß einem der Ansprüche 1 bis 15.

16. Synchronmaschine (2; 2.2) nach Anspruch 15, **dadurch gekennzeichnet, daß** der Rotor (5; 5.2) als Außenläufer ausgeführt ist.

17. Verwendung einer Synchronmaschine (2; 2.2) nach einem der Ansprüche 15 oder 16 als Motor.

18. Verwendung einer Synchronmaschine (2; 2.2) nach einem der Ansprüche 15 oder 16 als Generator.

19. Verwendung einer Synchronmaschine (2; 2.2) gemäß einem der Ansprüche 17 oder 18 in einem Fahrzeug.
